# EUROPÄISCHE PATENTSCHRIFT

(11) **EP 0 668 489 B1**
(45) Veröffentlichungstag und Bekanntmachung des Hinweises auf die Patenterteilung: **27.05.1998**
(21) Anmeldenummer: 95101680.7
(22) Anmeldetag: 08.02.1995
(51) Int. Cl.: G01G 21/24

(54) **Haltevorrichtung für einen Lastträger einer Waage mit einer Wägezelleneinrichtung**
Device for holding the load-carrying device of a balance with a load cell device
Dispositif de fixation pour le moyen de support d'une balance avec capteur de charge

(30) Priorität: 16.02.1994 DE 4404849
(43) Veröffentlichungstag der Anmeldung: 23.08.1995
(73) Patentinhaber: GREIF-VELOX Maschinenfabrik GmbH, 23560 Lübeck (DE)
(72) Erfinder: Haase, Karl-Heinz, Dr. Ing., MX-72370 Puebla (MX); Thiele, Jörgen, Dipl. Ing., D-23566 Lübeck (DE)
(74) Vertreter: Vollmann, Heiko, Dipl.-Ing.

(56) Entgegenhaltungen:
- WO-A-93/22635
- DE-U- 9 202 382
- FR-A- 2 266 152

## Beschreibung

Die Erfindung geht aus von einer Haltevorrichtung für einen Lastträger einer Waage mit einer Wägezelleneinrichtung, enthaltend mehrere aufrecht angeordnete Rahmenteile zur Abstützung des Lastträgers an einem Gestell oder dergleichen und ein oberes und ein unteres Blattfederlenkerpaar zur elastischen Verbindung der Rahmenteile miteinander, wobei die vom Lastträger über das elastisch nachgiebige Rahmenteil beaufschlagbare Wägezelleneinrichtung innerhalb der Haltevorrichtung angeordnet ist. Eine derartige Haltevorrichtung ist in der DE 42 13 308 Al gezeigt und beschrieben.

Diese bekannte Haltevorrichtung besteht aus einem vorderen, d. h. lastträgerseitigen Rahmenteil und einem hinteren, d. h. waagengestellseitigen Rahmenteil, wobei beide Rahmenteile mittels eines oberen und eines unteren Blattfederlenkerpaares elastisch nachgiebig miteinander verbunden sind. Innerhalb der Haltevorrichtung ist eine Wägezelleneinrichtung ortsfest angeordnet, die von einem Arm des vorderen Rahmenteiles, an dem z. B. ein Lastgefäß als Lastträger befestigt ist, betätigt wird. Im Belastungsfall bewegt sich das vordere Rahmenteil relativ zu dem hinteren ortsfesten Rahmenteil im wesentlichen parallel nach unten, wobei das obere Lenkerpaar auf Zug und das untere Lenkerpaar auf Druck beansprucht wird. Zur Vermeidung des Einknickens des unteren Lenkerpaares müssen dessen Lenker zusätzlich versteift sein, wozu Versteifungsplatten daran befestigt sind, wobei aus Gründen der Wiegegenauigkeit auch Versteifungsplatten an dem oberen Lenkerpaar angeordnet sind. Derartige Versteifungsplatten machen jedoch die Waage unempfindlicher, denn die verbleibenden Spalte zwischen den Versteifungsplatten und den Befestigungsstellen der Lenkerpaare an den Rahmenteilen verschmutzen schell und/oder setzen sich mit Material aus der Umgebungsluft zu, wodurch die Waage in ihren Kenngrößen verändert wird und somit zunehmend meßwertverfälschende Effekte eintreten. Um dies zu vermeiden, werden Gummischläuche über die Lenker gezogen, die aber auch gewisse meßwertverfälschende Einflüsse bewirken, die dazu noch temperaturabhängig sind, worunter insgesamt wiederum die Wiegegenauigkeit der Waage leidet. Außerdem bedeuten die Versteifungsplatten einen erhöhten Fertigungsaufwand.

Es ist auch bekannt, bei Haltevorrichtungen der einleitend angeführten Art ebenfalls das untere Lenkerpaar so anzuordnen, daß es auf Zug belastet wird. Hierzu besteht die Haltevorrichtung aus einem hinteren und einem vorderen Rahmenteilpaar, wobei beide Rahmenteilpaare zueinander parallel verlaufen. Das vordere Rahmenteilpaar besitzt an seinem Unterende zwei kraftumlenkende Arme, die sich bis hinter das hintere Rahmenteilpaar erstrecken. Die beiden unteren Lenker erstrecken sich somit vom hinteren Rahmenteilpaar nach hinten zu den Enden der genannten Arme und werden dadurch bei Belastung des vorderen Rahmenteilpaares auf Zug beansprucht. Diese Konstruktion bedingt jedoch eine Unsymmetrie in der Bauweise der Haltevorrichtung und dadurch zu erheblichen Störeffekten im örtlichen Verteilungsfehler der Haltevorrichtung. Eine Korrektur dieses Verteilungsfehlers verursacht außerordentliche Kosten für Korrektureinrichtungen und deren Einstellung, wobei eine Korrektur nur in geringen Grenzen erzielbar ist.

Die Aufgabe der Erfindung besteht in der Verbesserung einer Haltevorrichtung der einleitend angeführten Art, wobei die Haltevorrichtung mittels einer kostengünstig herstellbaren Konstruktion von symmetrischem Aufbau eine erhöhte Flexibilität bzw. Empfindlichkeit und einen kleineren örtlichen Verteilungsfehler aufweist und damit eine sehr hohe Auflösung und Wiegegenauigkeit bei einer Waage mit Wägezelleneinrichtung erlaubt.

Die Lösung dieser Aufgabe geht von einer Haltevorrichtung der einleitend angeführten Art aus und kennzeichnet sich dadurch, daß zwei seitliche, voneinander beabstandete Rahmenteilpaare aus jeweils zwei länglichen und gekreuzten Stangenelementen vorhanden sind, daß die gekreuzten Stangenelemente jedes Rahmenteilpaares an ihrem oberen und unteren Endbereich je mit einem versteifungsmittelfreien Blattfederlenker miteinander verbunden sind und daß die Gewichtskraft des Lastträgers einerseits an dem oberen lastträgerseitigen Abschnitt und andererseits an dem gestellseitigen hinteren Abschnitt des geneigten einen, elastisch nachgiebigen Stangenelementes jedes Rahmenteilpaares angreift, während das geneigte andere Stangenelement jedes Rahmenteilpaares, vorzugsweise an seinem oberen und unteren Abschnitt, an dem Gestell starr befestigbar ist, so daß beim Wiegen die Blattfederlenker nur auf Zug beansprucht werden.

In bevorzugter Weiterbildung besteht ein Merkmal darin, daß der obere und untere Lenker jedes Rahmenteilpaares in seinem versteifungsmittelfreien Abschnitt zwischen seinen Befestigungsstellen an den Stangenelementen schmaler ausgebildet ist als an den genannten Befestigungsstellen.

Die erfindungsgemäße Lösung erlaubt eine vollständige symmetrische Bauweise der Haltevorrichtung sowohl in bezug auf ihre zwei senkrecht zueinander stehenden vertikalen Mittelebenen als auch in bezug auf ihre horizontale Mittelebene mit einfachen Bauteilen, was neben verbesserter Genauigkeit der Waage einen besonderen Fertigungsvorteil bedeutet, so daß Kosten an Material und Herstellung eingespart werden können. Ein weiterer wichtiger Vorteil besteht darin, daß die oberen und unteren elastischen Blattfederlenker keine Versteifungsmittel in Form üblicher Platten benötigen und daß sowohl das obere als auch das untere Lenkerpaar auf Zug belastet wird. Somit können keine meßwertverfälschenden Effekte, die an den Lenkerpaaren angebrachte Versteifungsplatten und/oder deren Schutzeinrichtungen sonst bewirken, mehr auftreten bzw. sind stark minimiert. Insgesamt ist durch die erfindungsgemäße Bauweise der Haltevorrichtung auch der örtliche Verteilungsfehler der Haltevorrichtung stark herabgesetzt, so daß insgesamt eine beträchtlich verbesserte Empfindlichkeit und Wiegegenauigkeit einer Waage mit Wägezelleneinrichtung erreicht ist. Des weiteren werden aufgrund nicht mehr erforderlicher Versteifungsplatten und deren Schutzeinrichtungen an den Lenkern ebenfalls erhebliche Fertigungskosten eingesprart.

Gemäß dem Weiterbildungsmerkmal, daß alle nur noch auf Zug beanspruchten Blattfederlenker entlang ihres versteifungsmittelfreien Zwischenabschnittes schmaler ausgebildet sein können als an ihren Montagestellen, ergibt sich der weitere Vorteil, daß der Hysteresefehler der Waage erheblich gesenkt werden kann.

Die Erfindung ist nachstehend anhand eines in den anliegenden Zeichnungen dargestellten Ausführungsbeispieles näher erläutert. Es zeigen:
- Fig. 1: eine Seitenansicht auf die Haltevorrichtung,
- Fig. 2: eine Ansicht gemäß der Linie II-II in Fig. 1,
- Fig. 3: eine Aufsicht auf einen Blattfederlenker für die Haltevorrichtung,
- Fig. 4: eine Weiterbildung des Ausführungsbeispieles in teilweiser perspektivischer Darstellung,
- Fig. 5: eine seitliche Schnittdarstellung des Beispieles nach Fig. 4,
- Fig. 6: eine teilweise Ansicht gemäß dem Pfeil III in Fig. 5,
- Fig. 7: eine Aufsicht auf ein Bauteil nach Fig. 6.

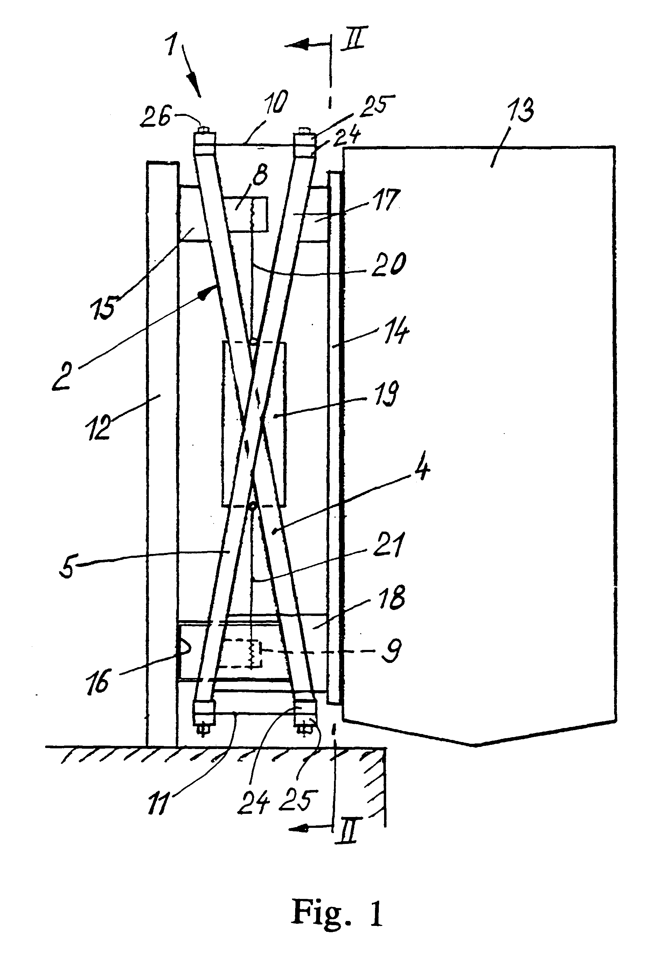

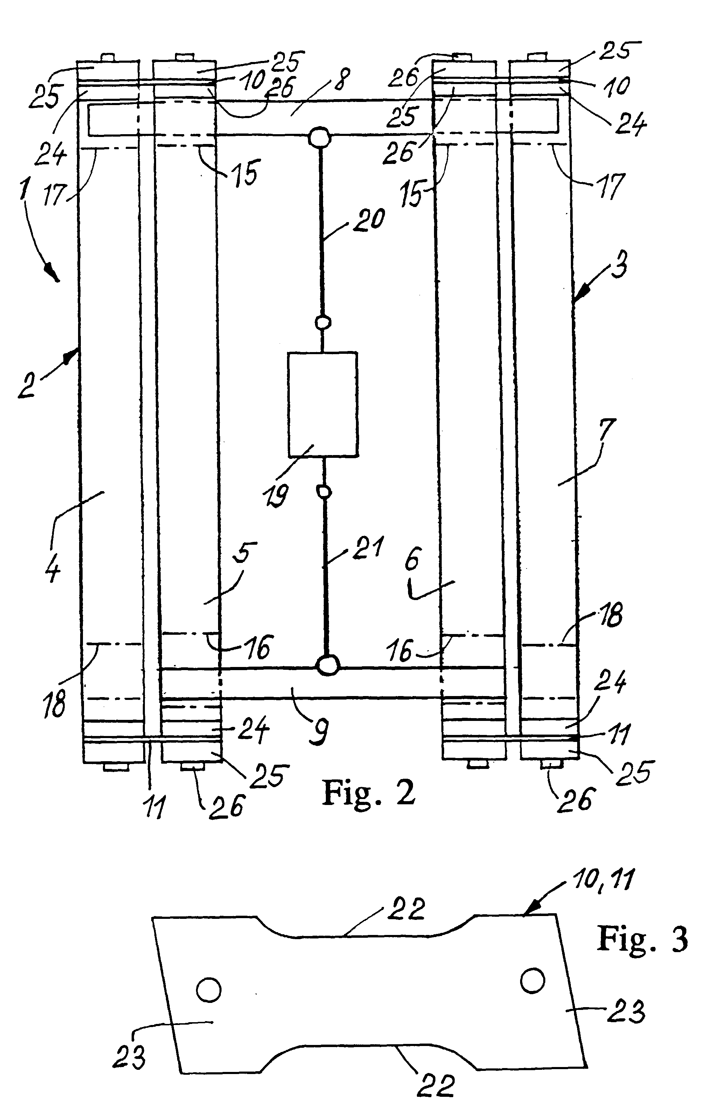

Gemäß den Figuren 1 und 2 umfaßt die allgemein mit 1 bezeichnete Haltevorrichtung zwei seitliche Rahmenteilpaare 2 und 3, die je aus zwei länglichen und gekreuzten Stangenelementen 4 und 5 bzw. 6 und 7 bestehen. Die beiden Rahmenteilpaare 2 und 3 sind mit Abstand voneinander angeordnet, wie Fig. 2 zeigt, und durch ein oberes Querelement 8 und ein unteres Querelement 9 miteinander verbunden. Die Stangenelemente 4 und 5 bzw. 6 und 7 jedes Rahmenteilpaares 2 und 3 sind wiederum durch obere Lenker 10 und untere Lenker 11 aus elastischem Blattfedermaterial, welches für diese Zwecke bekannt ist, eleastisch miteinander verbunden. Die Haltevorrichtung 1 ist einerseits an einem Gestell 12 oder dergleichen einer nicht weiter dargestellten Waage starr montierbar und trägt auf der gegenüberliegenden Seite einen Lastträger 13 in Form beispielsweise eines Lastgefäßes zur Aufnahme der abzuwiegenden Masse bzw. Menge. Zur Befestigung des Lastträgers 13 an der Haltevorrichtung 1 kann auch so vorgegangen werden, daß ein Halteelement 14 zwischengeschaltet ist, welches seinerseits an der Haltevorrichtung 1 befestigt ist und andererseits den Lastträger 13 trägt.

Wie es besser aus Fig. 1 zu ersehen ist, sind die länglichen, gekreuzten und nahe beieinander befindlichen Stangenelemente jedes Rahmenteilpaares oben und unten durch solche Blattfederlenker 10 und 11 miteinander elastisch verbunden, die keine üblichen Versteifungsplatten aufweisen. Die Versteifungsplatten können deshalb entfallen, weil sowohl die oberen Lenker 10 als auch die unteren Lenker 11 jeweils nur auf Zug beansprucht werden, so daß eine Einknickgefahr für die Lenker nicht besteht.

Das ortsfeste Stangenelement 4 und 7 jedes Rahmenteilpaares 2 bzw. 3 ist z. B. an seinem oberen und unteren Abschnitt beispielsweise durch Verbindungsmittel 15 und 16 an dem Gestell 12 starr befestigt. Die elastisch nachgiebigen Stangenelemente 5 und 6 jedes Rahmenteilpaares sind z. B. ebenfalls an ihrem oberen und unteren Abschnitt über Verbindungsmittel 17 und 18 an dem Lastgefäß 13 bzw. an dem zwischengeschalteten Halteelement 14 befestigt. Somit greift die gesamte Gewichtskraft des Lastträgers 13 einerseits an dem oberen vorderen Abschnitt und andererseits an dem unteren hinteren Abschnitt des jeweils elastisch nachgiebigen Stangenelementes jedes Rahmenteilpaares an und überträgt somit das zu messende Gewicht auf eine Wägezelleneinrichtung 19 der Haltevorrichtung 1.

Wie auch aus den Figuren 1 und 2 zu erkennen ist, ist die Wägezelleneinrichtung 19 zentral in der Haltevorrichtung 1 vorgesehen. Solche Einrichtungen 19 sind bekannt und hier daher nicht näher erläutert. Die Einrichtung 19 ist über zwei längliche Verbindungselemente 20 und 21, z. B. in Form von Koppelgliedern, mit dem oberen und unteren Querelement 8 bzw. 9 gelenkig verbunden. Da das obere Querelement 8 durch seine Befestigung an den starr montierten Stangenelementen 4, 7 ortsfest und das untere Querelement 9 durch seine Befestigung im unteren Abschnitt der elastisch nachgiebigen Stangenelemente 5 und 6 beweglich ist, wird bei Einleitung der Kraft aus dem Lastträger 13 in die beiden nachgiebigen Stangenelemente jedes Rahmenteilpaares die Wägezelleneinrichtung entsprechend beaufschlagt und kann so ihre Meßfunktion durchführen.

Die oberen und unteren Lenker 10 und 11 können wie in Fig. 3 gezeigt ausgebildet sein. Die dort gezeigten Lenker weisen zwei sich gegenüberliegende Einschnürungen 22 auf, wodurch sie in diesem Abschnitt schmaler ausgebildet sind als in ihren Montagebereichen 23. Um die Lenker 10, 11 sicher an den Stangenelementen 4, 5, 6 und 7 der Rahmenteilpaare 2 und 3 zu befestigen, sind die Stangenelemente an ihren Enden mit Platten 24 versehen, auf denen die Lenker aufliegen. Mit weiteren Montageplatten 25 und Schrauben 26 sind die Lenker dann an den Stangenelementen befestigt. Alternativ zu thermisch beanspruchenden Schweißverfahren oder zusätzlich zu der Schraubbefestigung der Lenker 10, 11 kann auch eine Klebetechnik angewendet werden, um die beiden Platten 24 und 25 mit den Lenkern 10, 11 zu verbinden.

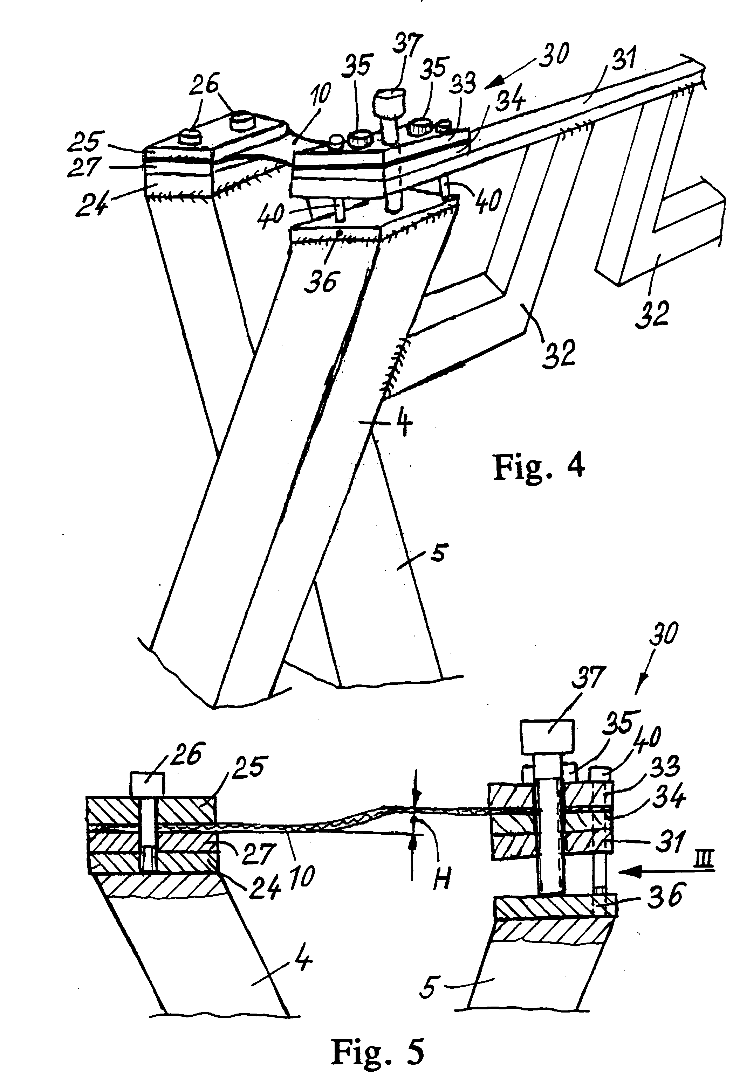

Obwohl das vorstehend beschriebene Ausführungsbeispiel schon einen kleineren immanenten örtlichen Verteilungsfehler aufweist als bekannte Haltevorrichtungen, kann der örtliche Verteilungsfehler in Weiterbildung der Haltevorrichtung durch wenigstens eine zusätzlich vorgesehene Abgleicheinrichtung 30 noch weiter minimiert oder gänzlich beseitigt werden. Eine solche Abgleicheinrichtung ist in den Figuren 4 bis 7 dargestellt. Zum Beispiel ist je eine Abgleicheinrichtung 30 am Oberende jedes der elastisch beweglichen Stangenelemente 4, 7 vorgesehen, wobei die Abgleicheinrichtung nur an dem Stangenelement 4 gezeigt ist.

Die Oberenden der unbeweglichen Stangenelemente 5 und 6 können so ausgebildet sein, wie es in Verbindung mit den Figuren 1 und 2 gezeigt und beschrieben ist. Hierbei kann in Ergänzung auch so vorgegangen werden, daß zwischen den Platten 24 und 25 noch eine Zwischenplatte 27 vorgesehen ist, wie es Fig. 4 zeigt. Alternativ kann die mit den Stangenelementen 5, 6 verschweißte Platte 24 auch eine größere Dicke aufweisen, um eine angepaßte Lage der oberen Lenker 10 in Bezug auf die zugehörigen Abgleicheinrichtungen 30 zu erreichen.

Im gezeigten Fall umfassen zwei sich gegenüberliegende, obere Abgleicheinrichtungen 30 ein gemeinsames Querelement 31, vorzugsweise in Form eines Flachstahlmateriales, das gemäß Fig. 4 so angeordnet ist, daß es in vertikaler Richtung nachgiebig ist, wie noch erläutert ist, und in horizontaler Richtung starr ist, d. h. in dieser Richtung nicht nachgeben kann. Das Querelement 31 erstreckt sich von oberhalb des Oberendes des einen beweglichen Stangenelementes 4 bis über das Oberende des anderen beweglichen Stangenelementes 7 und ist durch zwei winklige Hilfsträger 32 befestigt (Fig. 4). Hierzu ist am Endbereich jedes beweglichen Stangenelementes ein einwärts gerichteter Hilfsträger vorgesehen, an dessen nach oben gerichteten Schenkel das gemeinsame Querelement 31 z. B. durch Schweißen befestigt ist.

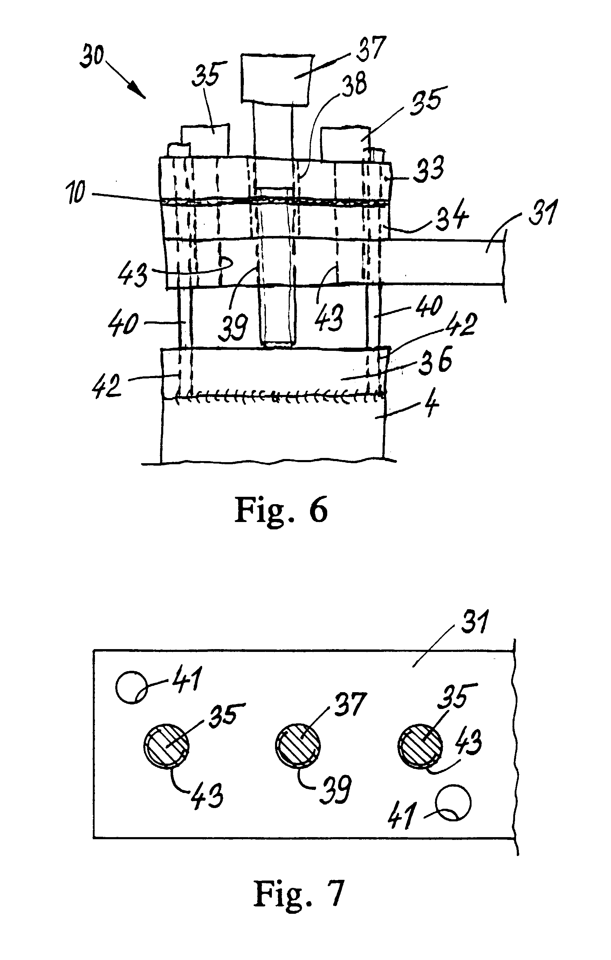

Die Abgleicheinrichtungen 30 umfassen weiter jeweils ein Plattenpaar 33, 34, das beispielsweise mittels Schrauben 35 mit dem flachen, gemeinsamen Querelement 31 verbunden ist und das zwischen sich das Ende des oberen Lenkers 10 aufnimmt, so daß dieser über das Querelement 31 und die winkligen Hilfsträger 32 mit dem jeweiligen beweglichen Stangenelement 4, 7 fest verbunden ist. Als weiterer Bestandteil der Abgleichvorrichtungen ist eine Aufsetzplatte 36 vorgesehen, wobei die Aufsetzplatten mit dem Oberende jedes beweglichen Stangenelementes 4, 7 verschweißt sind. Ferner ist eine Schraubeinrichtung 37, z. B. in Form einer einzigen Einstellschraube (Fig. 4), für jede Abgleicheinrichtung vorgesehen, um diese einstellen zu können. Das Plattenpaar 33, 34 besitzt hierzu ein zentrales Durchgangsloch 38 für die Einstellschraube 37, während das gemeinsame Querelement 31 mit einem Gewindeloch 39 versehen ist, wie es die Figuren 6 und 7 zeigen. Die Einstellschraube 37 drückt auf die jeweilige Aufsetzplatte 36, so daß dadurch der jeweilige Endabschnitt des gemeinsamen Querelementes 31 in vertikaler Richtung eingestellt werden kann, um den örtlichen Verteilungsfehler abzugleichen bzw. auszuschalten. Für die Sicherung der Einstellung der Abgleicheinrichtungen 30 ist diese beispielsweise mit zwei weiteren Sicherungsschrauben 40 versehen. Diese Schrauben 40 durchdringen das jeweilige Plattenpaar 33, 34 und das Querelement 31 durch die Löcher 41 und sind mit Gewindelöchern 42 der Aufsetzplatte 36 verschraubt. Durch Anziehen der Schrauben 40 wird dadurch gegen die Rückhaltekraft der Einstellschraube 37 die Einstellung der jeweiligen Abgleicheinrichtung 30 gesichert.

In den Figuren 4, 5 und 6 ist der Abstand zwischen der Aufsetzplatte 36 und dem gemeinsamen Querelement 31 sowie die Verformung H des oberen Lenkers 10 übertrieben groß dargestellt. In der Praxis beträgt der genannte Abstand in der Regel etwa 30 bis 100 µm und dürfte im allgemeinen etwa bei 50 µm liegen. In den Fig. 6 und 7 sind noch die Gewindelöcher 43 für die Befestigungsschrauben 35 des die oberen Lenker 10 fixierenden Plattenpaares 33, 34 angedeutet. Obwohl ein gemeinsames Querelement 31 vorteilhaft ist, können auch zwei einzelne nachgiebige Elemente vorgesehen sein. Das oder die beweglichen Stangenelemente 4, 7 weisen dann je ein eigenes vertikal nachgiebiges Element auf, das sich bis über das Ende des Stangenelementes erstreckt. Der übrige Aufbau der Abgleicheinrichtung bleibt unverändert.

## Patentansprüche

1. Haltevorrichtung für einen Lastträger (13) einer Waage mit einer Wägezelleneinrichtung (19), enthaltend mehrere aufrecht angeordnete Rahmenteile zur Abstützung des Lastträgers an einem Gestell (12) oder dergleichen der Waage und ein oberes und ein unteres Blattfederlenkerpaar (10,11) zur elastischen Verbindung der Rahmenteile miteinander, wobei die vom Lastträger über das elastisch nachgiebige Rahmenteil (5,6,9) beaufschlagbare Wägezelleneinrichtung innerhalb der Haltevorrichtung angeordnet ist, dadurch gekennzeichnet, daß zwei seitliche, voneinander beabstandete Rahmenteilpaare (2, 3) aus jeweils zwei länglichen und gekreuzten Stangenelementen mit Abstand voneinander vorhanden sind, daß die gekreuzten Stangenelemente (4, 5; 6, 7) jedes Rahmenteilpaares an ihrem oberen und unteren Endbereich je mit einem versteifungsmittelfreien Blattfederlenker (10, 11) miteinander verbunden sind und daß die Gewichtskraft des Lastträgers (13) einerseits an dem oberen lastträgerseitigen Abschnitt (17) und andererseits an dem unteren waageseitigen Abschnitt (18) des geneigten einen, elastisch nachgiebigen Stangenelementes (5, 6) jedes Rahmenteilpaares (2, 3) angreift, während das geneigte andere Stangenelement (4, 7) jedes Rahmenteilpaares, vorzugsweise an seinem oberen und unteren Abschnitt, an dem genannten Gestell (12) starr befestigbar ist, so daß beim Wiegen die Blattfederlenker (10,11) nur auf Zug beansprucht werden.

2. Haltevorrichtung nach Anspruch 1, dadurch gekennzeichnet, daß der obere und untere Blattfederlenker (10, 11) jedes Rahmenteilpaares (2, 3) in seinem freien Abschnitt (22) zwischen seinen Befestigungsstellen (23) an den Stangenelementen (4, 5, 6, 7) schmaler ausgebildet ist als an den genannten Befestigungsstellen.

3. Haltevorrichtung nach Anspruch 1 oder 2, dadurch gekennzeichnet, daß der obere gestellseitige Abschnitt der starr befestigten Stangenelemente (4, 7) und der untere gestellseitige Abschnitt der elastisch nachgiebigen Stangenelemente (5, 6) je mit einem Querelement (8, 9) miteinander starr verbunden sind und daß die Wägezelleneinrichtung (19) über Verbindungsmittel (20, 21) an den beiden Querelementen (8, 9) zentral in der Haltevorrichtung (1) befestigt ist.

4. Haltevorrichtung nach Anspruch 1, 2 oder 3, dadurch gekennzeichnet, daß am Ende wenigstens eines der elastisch beweglichen Stangenelemente (4, 7) eine Abgleicheinrichtung (30) zum weiteren Minimieren oder gänzlichen Beseitigen des örtlichen Verteilungsfehlers der Haltevorrichtung (1) vorgesehen ist.

5. Haltevorrichtung nach Anspruch 4, dadurch gekennzeichnet, daß die Abgleicheinrichtung (30) einschließt ein elastisch nachgiebiges Element (31), das an dem beweglichen Stangenelement (4, 7) befestigt ist und sich bis über dessen Ende erstreckt und in vertikaler Richtung elastisch nachgiebig und in horizontaler Richtung starr ist, ein an dem Ende des Elementes (31) befestigtes Plattenpaar (33, 34) zur Befestigung des oberen Lenkers (10) an dem Element, eine an dem Oberende des beweglichen Stangenelementes (4, 7) befestigte Aufsetzplatte (36) zum Einstellen und zur Sicherung der Einstellung der Abgleicheinrichtung (30) und eine mit dem Element (31) und der Aufsetzplatte (36) zusammenwirkende Schraubeinrichtung (37) zum Einstellen der Abgleicheinrichtung.

6. Haltevorrichtung nach Anspruch 5, dadurch gekennzeichnet, daß die Schraubeinrichtung (37) aus einer Einstellschraube besteht, deren Gewinde mit einem Gewindeloch (39) des als Flachstahlmaterial ausgebildeten Elementes (31) in Eingriff steht und die auf die Aufsetzplatte (36) drückt.

7. Haltevorrichtung nach Anspruch 5 oder 6, dadurch gekennzeichnet, daß wenigstens an einem der Endbereiche jedes beweglichen Stangenelementes (4, 7) ein einwärts gerichteter Hilfsträger (32) vorgesehen ist und daß an dem anderen Ende der beiden Hilfsträger (32) ein gemeinsames Querelement (31) als nachgiebiges Element starr befestigt ist.

## Claims

1. A holding device for a load carrier (13) of a balance with a load cell means (19), containing several uprightly arranged frame parts for supporting the load carrier on a stand (12) or likewise of the balance and an upper and a lower pair of leaf spring connecting rods (10, 11) for elastically connecting the frame parts to one another, wherein the load cell means impingable by the load carrier via the elastically flexible frame part (5, 6, 9) is arranged within the holding device, characterised in that two lateral frame part pairs (2, 3) distanced from one another, in each case of two elongate and crossed rod elements at a distance from one another are present, that the crossed rod elements (4, 5; 6, 7) of each frame part pair at their upper and lower end region are connected to one another each with a leaf spring connecting rod (10, 11) free of reinforcing means and that the weight force of the load carrier (13) on the one hand engages on the upper section (17) on the load carrier side and on the other hand on the lower section (18) on the balance side of the inclined one elastically flexible rod element (5, 6) of each frame part pair (2, 3), whereas the inclined other rod element (4, 7) of each frame part pair, preferably at its upper and lower section is rigidly fastenable to the mentioned stand (12), so that on weighing the leaf spring connecting rods (10, 11) are only loaded in tension.

2. A holding device according to claim 1, characterised in that the upper and lower leaf spring connecting rods (10, 11) of each frame part pair (2, 3) in its free section (22) between its fastening locations (23) on the rod elements (4, 5, 6, 7) is formed narrower than at the mentioned fastening locations.

3. A holding device according to claim 1 or 2, characterised in that the upper section on the stand side of the rigidly fastened rod elements (4, 7) and the lower section on the stand side of the elastically flexible rod elements (5, 6) are each rigidly connected to one another by a transverse element (8, 9) and that the load cell means (19) is centrally fastened in the holding device (1) to both transverse elements (8,9) via connecting means (20, 21).

4. A holding device according to claim 1, 2 or 3, characterised in that at the end of at least one of the elastically moving rod elements (4, 7) there is provided an adjusting means (30) for the further minimising or complete elimination of the local distribution error of the holding device (1).

5. A holding device according to claim 4, characterised in that the adjusting means (30) includes an elastically flexible element (31) which is fastened to the moving rod element (4, 7) and extends up to over the end thereof and in the vertical direction is elastically flexible and in the horizontal direction is rigid, a plate pair (33, 34), attached to the end of the element (31), for fastening the upper connecting rod (10) to the element, a contact plate (36) fastened to the upper end of the moving rod element (4, 7) for setting and for securing the setting of the adjusting means and a screw means (37) cooperating with the element (31) and with the contact plate (36) for setting the adjusting means.

6. A holding device according to claim 5, characterised in that the screw means (37) consists of a setting screw whose thread is in engagement with a threaded bore (39) of the element (31) formed as a flat steel material, and which presses on the contact plate (36).

7. A holding device according to claim 5 or 6, characterised in that at least at one of the end regions of each moving rod element (4, 7) there is provided an inwardly directed auxiliary carrier (32) and that at the other end of both auxiliary carriers (32) a common transverse element (31) is rigidly attached as a flexible element.

## Revendications

1. Dispositif de retenue pour un récepteur de charge (13) d'une bascule comprenant un mécanisme de cellule de charge (19), contenant plusieurs éléments d'encadrement disposés à la verticale pour permettre au récepteur de charge de s'appuyer sur un bâti (12) ou analogues de la bascule et une paire de bielles de liaison supérieure et inférieure (10, 11) à ressorts à lames pour la liaison élastique des éléments d'encadrement l'un à l'autre, dans lequel le mécanisme de cellule de charge, qui peut être sollicité par le récepteur de charge via l'élément d'encadrement (5, 6, 9) apte à une déformation élastique, est disposé à l'intérieur du dispositif de retenue, caractérisé en ce que deux paires latérales d'éléments d'encadrement (2, 3) disposées à l'écart l'une de l'autre, constituées respectivement de deux éléments en forme de barres longitudinales et croisées, sont présents à l'écart l'un de l'autre, en ce que les éléments en forme de barres croisées (4, 5; 6, 7) de chaque paire d'éléments d'encadrement sont reliés à leurs extrémités terminales supérieure et inférieure respectivement avec une bielle de liaison à ressort à lames (10, 11) exempte d'un agent de renforcement, et en ce que le poids du récepteur de charge (13) s'exerce d'une part sur la section supérieure (17) côté récepteur de charge et, d'autre part, sur la section inférieure (18) côté bascule du premier élément en forme de barre inclinée (5, 6) élastiquement déformable de chaque paire d'éléments d'encadrement (2, 3), tandis que l'autre élément en forme de barre inclinée (4, 7) de chaque paire d'éléments d'encadrement, de préférence à ses extrémités supérieure et inférieure, peut venir se fixer à demeure au bâti (12) mentionné, si bien que, lors de la pesée, les bielles (10, 11) à ressorts à lames sont soumises seulement à un effort de traction.

2. Dispositif de retenue selon la revendication 1, caractérisé en ce que les bielles de liaison supérieure et inférieure (10, 11) à ressorts à lames de chaque paire d'éléments d'encadrement (2, 3) sont réalisées, dans leur section libre (22), pour être plus étroites entre leurs endroits de fixation (23) aux éléments en forme de barres (4, 5, 6, 7) qu'aux endroits de fixation mentionnés.

3. Dispositif de retenue selon la revendication 1 ou 2, caractérisé en ce que la section supérieure côté bâti des éléments en forme de barres (4, 7) fixés à demeure et la section inférieure côté bâti des éléments en forme de barres (5, 6) élastiquement déformables sont reliées à demeure l'une à l'autre respectivement à l'aide d'un élément transversal (8, 9), et en ce que le mécanisme de cellule de charge (19) est fixé via des moyens de liaison (20, 21) aux deux éléments transversaux (8, 9) en position centrale dans le dispositif de retenue (1).

4. Dispositif de retenue selon la revendication 1, 2 ou 3, caractérisé en ce qu'on prévoit, à l'extrémité d'au moins un des éléments en forme de barres (4, 7) mobiles en élasticité, un mécanisme d'équilibrage (30) pour minimiser davantage, voire éliminer complètement l'erreur de distribution locale du dispositif de retenue (1).

5. Dispositif de retenue selon la revendication 4, caractérisé en ce que le mécanisme d'équilibrage (30) englobe un élément (31) élastiquement déformable qui est fixé à l'élément en forme de barre mobile (4, 7) et qui s'étend au-delà de l'extrémité de ce dernier, et qui est élastiquement déformable en direction verticale et rigide en direction horizontale, une paire de plaques (33, 34) fixées à l'extrémité de l'élément (31) pour la fixation de la bielle de liaison supérieure (10) à l'élément, une plaque d'appui (36) fixée à l'extrémité supérieure de l'élément en forme de barre mobile (4, 7) pour réaliser et fixer le réglage du mécanisme d'équilibrage (30), et un mécanisme à vis (37) coopérant avec l'élément (31) et avec la plaque d'appui (36) pour régler le mécanisme d'équilibrage.

6. Dispositif de retenue selon la revendication 5, caractérisé en ce que le mécanisme à vis (37) est constitué d'une vis de réglage dont le filet vient s'engrener avec un trou taraudé (39) de l'élément (31) réalisé sous forme d'une matière en acier plat, et qui exerce une pression sur la plaque d'appui (36).

7. Dispositif de retenue selon la revendication 5 ou 6, caractérisé en ce qu'on prévoit, au moins à une des zones terminales de chaque élément en forme de barre mobile (4, 7), un support auxiliaire (32) orienté vers l'intérieur et en ce que, à l'autre extrémité des deux supports auxiliaires (32), est fixé à demeure un élément transversal commun (31) sous forme d'élément flexible.
